# EUROPEAN PATENT APPLICATION

(11) **EP 2 567 840 A1**
(43) Date of publication of application: **13.03.2013**
(21) Application number: 11768787.1
(22) Date of filing: 08.04.2011
(51) Int. Cl.: B60H 1/22, B60H 1/03

(54) **VEHICLE AIR CONDITIONING ELECTRIC HEATING TYPE HEATER CORE, AND VEHICLE AIR CONDITIONING DEVICE PROVIDED THEREWITH**

(30) Priority: 12.04.2010 JP 2010091727
(71) Applicant: Valeo Japan Co., Ltd., Saitama 360-0193 (JP)
(72) Inventor: NAGANO, Hideki, Kumagaya-shi Saitama 360-0193 (JP); ARAKI, Daisuke, Kumagaya-shi Saitama 360-0193 (JP); ETO, Yoshihisa, Kumagaya-shi Saitama 360-0193 (JP); HAYASHI, Naoto, Kumagaya-shi Saitama 360-0193 (JP)
(74) Representative: Delplanque, Arnaud
(86) International application number: PCT/JP2011/058867
(87) International publication number: WO 2011/129266

(57) **Abstract**

An object of the present invention, regarding an electric heating type heater core to be used for vehicle air conditioning, is to provide a vehicle air conditioning electric heating type heater core which has a versatile structure capable of ensuring temperature uniformity even when blow amount distribution exists in a blowing air passage and a vehicle air conditioning device provided therewith. A vehicle air conditioning electric heating type heater core (100) according to the present invention includes a heat exchange portion (10) which has plural tubes (2) and fins (3), and a header (4) to which the respective tubes are connected; while an electric heating component 1 is arranged at the inside of the header, the respective tubes and the header form a closed-system flow passage (50), and liquid heat medium L is filled into the closed-system flow passage.

## Description

### TECHNICAL FIELD

The present invention relates to an electric heating type heater core which is used for vehicle air conditioning.

### BACKGROUND ART

In a hybrid electric vehicle or an electric vehicle, a heating amount of an internal combustion engine (hereinafter, also called an engine) is small or an engine itself does not exist. Therefore, there is a problem that sufficient heat cannot be obtained with an air heating system due to a heated-water type heater core which utilizes engine exhaust heat from engine cooling water as a conventional gasoline-powered vehicle.

To solve the above problem, there is means to heat air in a cabin by utilizing a refrigeration cycle as a heat pump. However, there may be a case that a heat exchanger outside a vehicle is frozen when outside air temperature is below zero. Consequently, there is a problem that sufficient air heating capability cannot be obtained stably. Accordingly, there has been proposed a technology to use an electric heating type heater core as an auxiliary heater for heat pump capacity (e.g., see Patent Literature 1).

An electric heating type heater core has a structure in which a heating element (an electric heating type heater) is arranged at a heat exchange portion against air as increasing transfer area by transferring generated heat to a fin so as to heat passing air (i.e., see Patent Literature 2 or 3). Here, it is common that blow speed of air in a blowing air passage where a heater core is installed is not even at the same section of the blowing air passage with existence of blow speed distribution as being not uniform owing to complexity of a shape of the blowing air passage. Accordingly, in a case that an electric heating type heater core is arranged in a blowing air passage, it is required for uniformizing hot air temperature to increase a heating amount at a region having high blow speed (region with a large airflow amount) and to decrease a heating amount at a region having low blow speed (region with a small airflow amount). As a technology to adjust temperature distribution of an electric heating type heater core, there have been proposed a technology to vary density of heating elements of the electric heating type heater core (e.g., see Patent Literature 2) and a technology to control powering time for each heating element (e.g., see Patent Literature 3).

Further, there has been proposed a heater core which integrates an electric heater with a heated-water type heater core utilizing exhaust heat of engine cooling water (e.g., see Patent Literature 4).

### CITATION LIST

### PATENT LITERATURE

Patent Literature 1: Japanese Patent Application Laid-Open No. 07-237431
Patent Literature 2: Japanese Patent Application Laid-Open No. 2006-213232
Patent Literature 3: Japanese Patent Application Laid-Open No. 2006-218909
Patent Literature 4: Japanese Patent Application Laid-Open No. 11-151926

### SUMMARY OF THE INVENTION

### TECHNICAL PROBLEM

According to the structure described in Patent Literature 1, since the auxiliary heater is arranged in a cabin separately from a heat exchanger, attaching space is increased. According to the structure described in Patent Literature 2, since blow speed in the blowing air passage is varied for each arranged passage, there is a problem of low versatility due to changing a density arrangement. According to the structure described in Patent Literature 3, there is a problem that the structure is complicated owing to necessity to arrange temperature detecting means for each heating element in addition to complication of control. Further, according to the structure described in Patent Literature 4, the electric heater cannot be used for an electric vehicle without an engine as being used as an auxiliary heat source of the heater-water type heater core due to engine cooling water heated by an engine.

An object of the present invention, regarding an electric heating type heater core to be used for vehicle air conditioning, is to provide a vehicle air conditioning electric heating type heater core which has a versatile structure capable of ensuring temperature uniformity even when blow amount distribution exists in a blowing air passage and a vehicle air conditioning device provided therewith.

### SOLUTION TO PROBLEM

To achieve the above object, a vehicle air conditioning electric heating type heater core according to the present invention includes a heat exchange portion which has plural tubes and fins, and a header to which the respective tubes are connected. Then, an electric heating component is arranged at the inside of the header, the respective tubes and the header form a closed-system flow passage, and liquid heat medium is filled into the closed-system flow passage.

In the vehicle air conditioning electric heating type heater core according to the present invention, it is preferable to further include a circulating means which circulates the liquid heat medium. Temperature can be further uniform. In addition, temperature uniformity can be ensured regardless of heater core posture.

Preferably, in the vehicle air conditioning electric heating type heater core according to the present invention, the header includes an upstream side header to which a discharge port side of the circulating means is connected and a downstream side header to which an intake port side of the circulating means is connected, each of the tubes has one end part connected to the upstream side header and the other end part connected to the downstream side header, and the electric heating component is arranged at the upstream side header and has heating distribution in which a heating amount is largest at a part close to the discharge port side of the circulating means. Temperature can be further uniform.

Preferably, in the vehicle air conditioning electric heating type heater core according to the present invention, the electric heating component has a cylindrical shape with at least two opening portions, and a hollow portion of the cylindrical shape is a passage for the liquid heat medium. Since surface area is large, the liquid heat medium can be effectively heated. In addition, the liquid heat medium passing through the cylinder can be reliably conveyed to a far tube.

In the vehicle air conditioning electric heating type heater core according to the present invention, it is preferable that an anti-vibration component is fitted to the outside of the electric heating component. The electric heating component can be prevented from being broken by vibration.

Preferably, in the vehicle air conditioning electric heating type heater core according to the present invention, the header includes an upstream side header to which a discharge port side of the circulating means is connected and a downstream side header to which an intake port side of the circulating means is connected, each of the tubes has one end part connected to the upstream side header and the other end part connected to the downstream side header, and the electric heating component is arranged at the upstream side header and is arranged at the upstream side from the respective tubes. Temperature can be further uniform as preventing shortcircuiting of cold water.

Preferably, in the vehicle air conditioning electric heating type heater core according the present invention, the header includes, in the single header, an upstream side compartment to which a discharge port side of the circulating means is connected and a downstream side compartment to which an intake port side of the circulating means is connected; and each of the tubes having one end part connected to the upstream side compartment and the other end part connected to the downstream side compartment as including a turnback portion. Space-saving can be achieved as singularly arranging the header.

In the vehicle air conditioning electric heating type heater core according to the present invention, it is preferable to further include a heat exchange portion temperature detecting element which detects temperature of the heat exchange portion, a heating control means which controls a heating amount of the electric heating component in accordance with the temperature of the heat exchange portion obtained from the heat exchange portion temperature detecting element, and a circulation amount control means which controls a circulation amount by the circulating means in accordance with the temperature of the heat exchange portion obtained from the heat exchange portion temperature detecting element. The part count of the temperature detecting elements can be reduced.

In the vehicle air conditioning electric heating type heater core according to the present invention, it is preferable to further include a first liquid temperature detecting element which is arranged at the downstream side of the discharge port of the circulating means and at the downstream side of the electric heating component, a heating control means which controls a heating amount of the electric heating component in accordance with the temperature obtained from the first liquid temperature detecting element, a second liquid temperature detecting element which is arranged between the tube connected to the downstream side header or the downstream side compartment and the intake port of the circulating means, and a circulation amount control means which controls the circulating means in accordance with the temperature obtained from the second liquid temperature detecting element. The heating amount and the circulation amount can be reliably controlled by arranging the detecting elements as described above.

It is preferable that the vehicle air conditioning electric heating type heater core according to the present invention is used as a heater core for a rear heater of a gasoline-powered vehicle, a heater core for an electric vehicle, or a heater core arranged in parallel to a heater core which utilizes engine cooling water of a hybrid electric vehicle as a heat source. It is fully suitable as a heater core for a low heat source vehicle. In addition, since engine cooling water is not supplied, cooling water piping in a vehicle can be eliminated.

A vehicle air conditioning device according to the present invention is provided with any one of the vehicle air conditioning electric heating type heater cores according to the present invention. Since heat of the electric heating component is diffused to the liquid heat medium, there is no local temperature rise and highly safe air conditioning device can be obtained. In particular, it is fully suitable as a vehicle air conditioning device for a low heat source vehicle. Further, it is possible to utilize attaching space of the air conditioning device and to be replaced with a heater core which uses engine cooling water by arranged instead of a heat exchanger. Since engine cooling water is not used, it is possible to be applied to an electric vehicle without an engine. Further, piping of engine cooling water can be eliminated when being applied to a gasoline-powered vehicle or a hybrid electric vehicle.

The above structure can be combined to the extent possible.

### EFFECTS OF THE INVENTION

Regarding an electric heating type heater core to be used for vehicle air conditioning, the present invention can provide a vehicle air conditioning electric heating type heater core which has a versatile structure capable of ensuring temperature uniformity even when blow amount distribution exists in a blowing air passage and a vehicle air conditioning device provided therewith.

### BRIEF DESCRIPTION OF THE DRAWINGS

Fig. 1 is a sectional view illustrating a structural outline of an example of a vehicle air conditioning electric heating type heater core according to the present embodiment.
Fig. 2 is a sectional view illustrating a structural outline of an example of a vehicle air conditioning electric heating type heater core having a circulating means.
Figs. 3 (a) to 3 (c) are views illustrating an example of an electric heating component. Fig. 3 (a) is a plane view, Fig. 3 (b) is a sectional view at A-A of Fig. 3 (a) , and Fig. 3 (c) is a sectional view at B-B of Fig. 3(a).
Fig. 4 is a sectional view illustrating a structural outline of an example of a vehicle air conditioning electric heating type heater core of an embodiment having one electric heating component.
Fig. 5 is a sectional view illustrating a structural outline of a modified example of the vehicle air conditioning electric heating type heater core of the embodiment having one electric heating component.
Fig. 6 is a sectional view illustrating a structural outline of another embodiment of the vehicle air conditioning electric heating type heater core.
Fig. 7 is a sectional view illustrating a structural outline of a vehicle air conditioning device provided with the vehicle air conditioning electric heating type heater core.

### DESCRIPTION OF EMBODIMENTS

In the following, an aspect of the present invention will be described with reference to the attached drawings. Embodiments described below are examples of the present invention and the present invention is not limited to the following embodiments. Here, structural elements having the same numeral in the present application and the drawings mutually denote the same elements. As long as producing an effect of the present invention, structural modification can be performed variously.

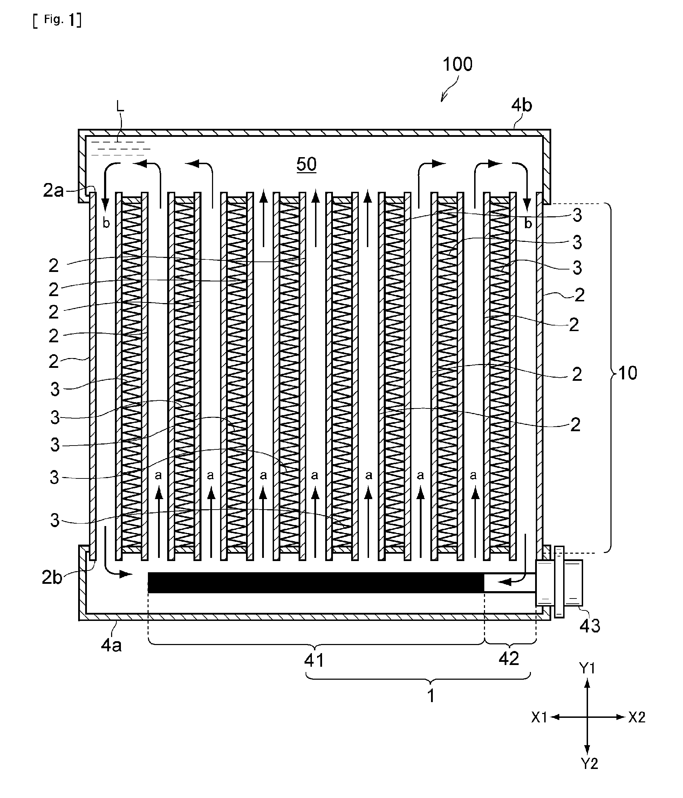

Fig. 1 is a sectional view illustrating a structural outline of an example of a vehicle air conditioning electric heating type heater core according to the present embodiment. The vehicle air conditioning electric heating type heater core 100 according to the present embodiment includes a heat exchange portion 10 which has plural tubes 2 and fins 3, and a header 4 to which the respective tubes 2 are connected. Then, an electric heating component 1 is arranged at the inside of the header 4, the respective tubes 2 and the header 4 form a closed-system flow passage 50, and a liquid heat medium L is filled into the closed-system flow passage 50.

The inside of each tube 2 forms the closed-system flow passage 50 of the liquid heat medium L. The tubes 2 are formed of metal material such as aluminum and copper. In the light of heat transfer, it is preferable that the sectional shape is like a flattened shape. Further, it is also possible to arrange a dimple or a rib targeting to increase a heat transfer coefficient. Here, material, a manufacturing process and a shape of the tubes are not limited as long as an effect of the present invention is produced.

The fins 3 are formed of metal material such as aluminum and copper. Fin shapes are not specifically limited. However, in the light of heat transfer, it is preferable to be a corrugated type of a thin plate which is bent in a wavelike fashion. Further, it is also possible to arrange to cut out a louver, a slit or the like as targeting to increase a heat transfer coefficient.

The heat exchange portion 10 may have a known structure and is formed to have a laminated structure with a fin 3 placed between the tubes 2 in Fig. 1. At the heat exchange portion 10, warm air to heat up the inside of a cabin is formed by performing heat exchange between the liquid heat medium L passing through the tubes 2 and blowing air passing through the fins 3.

The header 4 is formed of metal material such as aluminum and copper. The header 4 is a tank in which the liquid medium L is distributed to the respective tubes 2 and is merged therefrom.

The respective tubes 2 and the header 4 form the closed-system flow passage 50. The liquid heat medium L is filled into the closed-system flow passage 50. Here, the closed-system denotes a state that the flow passage 50 is not connected to another device such as an engine. That is, since engine cooling water is not utilized as the liquid heat medium L, piping for circulating engine cooling water is not necessary and space saving and cost reduction can be achieved. In addition, it is also possible to be adapted to an electric vehicle without an engine. Further, since a circulation amount of the liquid heat medium L can be drastically reduced compared to a traditional heater core which uses engine cooling water, power saving (electric power saving) and weight saving can be achieved. Therefore, it is fully suitable as a heater core for a low heat source vehicle. For example, it is preferable to be used as a heater core for a rear heater of a gasoline-powered vehicle, a heater core for an electric vehicle, or a heater core arranged in parallel to a heater core which utilizes engine cooling water of a hybrid electric vehicle as a heat source. In a case of being used for a rear heater of a gasoline-powered vehicle, flexibility of an installation position is increased owing to unnecessity of the piping as described above. In a case of being used for an electric vehicle, optimum and safe air heating can be provided with a limited electric capacity. In a case of being used for a hybrid electric vehicle, engine operation targeting only to maintain water temperature becomes unnecessary and fuel consumption can be improved.

Known medium such as water, antifreezing liquid and oil may be used as the liquid heat medium L. It is preferable that a filling amount of the liquid heat medium L is performed to prevent bubbles from being left in the closed-system flow passage 50 for avoiding operational sound of the liquid heat medium L.

It is preferable that the vehicle air conditioning electric heating type heater core according to the present embodiment further includes a reservoir tank portion which has an auxiliary space capable of absorbing volume variation caused when temperature of the liquid heat medium L becomes high.

For example, a known positive temperature coefficient (PTC) heater made of semiconductive ceramic is used as the electric heating component 1. Barium titanate series semiconductive ceramic may be an example thereof. It is used as a constant temperature heating element by utilizing PTC heater characteristics. The shape of the PTC heater may be appropriately selected among a plate shape, a bar-shape, a cylindrical shape and the like. Here, it is more preferable to be cylindrically-shaped. The electric heating component 1 is preferably arranged at the inside of the header 4 in a state of being non-contacted to a wall face of the header 4 and a state that the whole face thereof is immersed in the liquid heat medium L. Owing to being arranged in the non-contacted state and the immersed state, heat of the electric heating component 1 can be effectively transferred to the liquid heat medium L. For supplying power to the electric heating component 1, a terminal portion 43 is arranged at a side face of the header 4 in Fig 1 . However, the present embodiment is not limited to this. It is also possible to perform as integrating with later-mentioned a circulating means.

Owing to that the electric heating component 1 is provided with a heating portion 41 and a non-heating portion 42 and is arranged at a lower header 4a, the liquid heat medium L is circulated with natural convection. As an example, in Fig. 1, the heating portion 41 of the electric heating component 1 is arranged at a center part of the lower header 4a and the non-heating portion 42 of the electric heating component 1 is arranged at the terminal side. The liquid heat medium L heated by the electric heating component 1 is raised toward an upper header 4b as illustrated by arrows a as performing heat exchange against blowing air via the fins 3 and is lowered toward the lower header 4a as illustrated by arrows b. Then, the liquid heat medium L is raised again as being heated by the electric heating component 1. In this manner, with the vehicle air conditioning electric heating type heater core according to the present embodiment, since heat generated by the electric heating component 1 is diffused via the liquid heat medium L, it is not required to change an arrangement of the electric heating component 1 for each airflow rate distribution in the blowing air passage. Accordingly, regardless of a shape of a later-mentioned air conditioning device for attaching, it is possible to be diverted to various types of vehicles as having high versatility. Further, according to the vehicle air conditioning electric heating type heater core according to the present embodiment, favorable temperature uniformity can be ensured regardless of airflow rate distribution in the blowing air passage. A high level of safety is obtained without having local temperature rise. In Fig. 1, direction X1-X2 denotes the approximate right-left direction of a vehicle and direction Y1-Y2 denotes the approximate up-down direction of the vehicle.

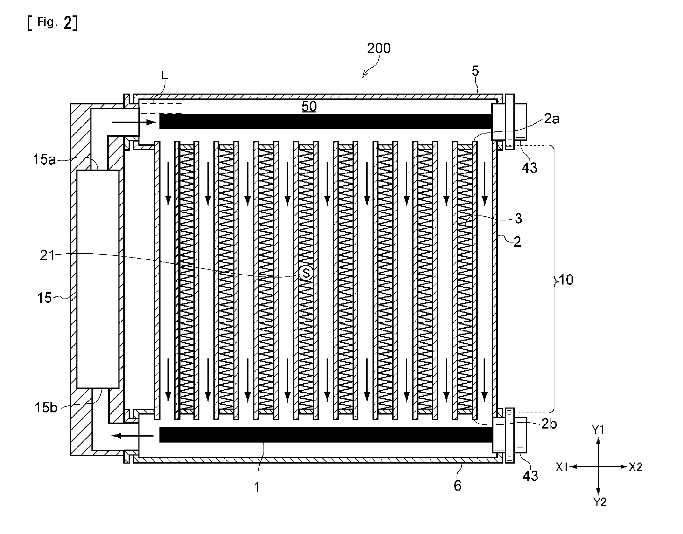

Fig. 2 is a sectional view illustrating a structural outline of an example of a vehicle air conditioning electric heating type heater core having a circulating means. It is preferable that a vehicle air conditioning electric heating type heater core 200 according to the present embodiment further includes a circulating means 15 which circulates the liquid heat medium L. Temperature uniformity can be further improved by forcedly convecting the liquid heat medium L with the circulating means 15. In a case of including the circulating means 15 as illustrated in Fig. 2 and Figs. 3 to 6 which will be described later, direction Y1-Y2 is not necessarily limited to the approximate up-down direction of a vehicle as being capable of being the approximate front-rear direction of the vehicle, for example, while direction X1-X2 is the approximate right-left direction of the vehicle. Owing to forced circulation with the circulating means 15 as described above, flexibility of a design position of the heater core is increased.

The circulating means 15 may adopt known circulating means such as a centrifugal pump type and an axial flow pump, for example, and is not specifically limited in the present embodiment. Further, for connection of the circulating means 15, it is preferable to connect piping to the header 4. Configuration of piping connection is not specifically limited in the present embodiment. It is possible to appropriately select a known connection method such as caulking ring connection and plate connection of an expansion valve type.

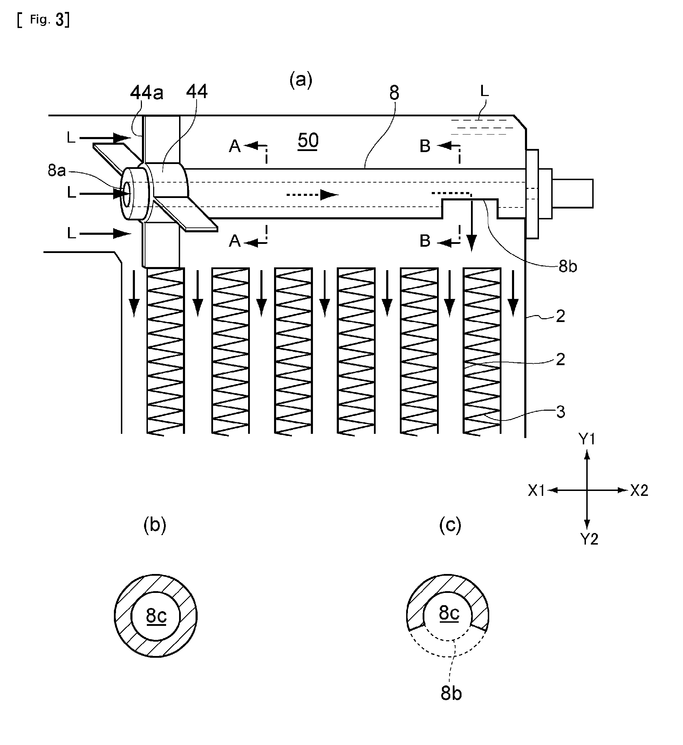

Figs. 3 (a) to 3 (c) are views illustrating an example of the electric heating component. Fig. 3 (a) is a plane view, Fig. 3 (b) is a sectional view at A-A of Fig. 3 (a) , and Fig. 3 (c) is a sectional view at B-B of Fig. 3(a). In the vehicle air conditioning electric heating type heater core according to the present embodiment, it is preferable that an electric heating component 8 has a cylindrical shape with at least two opening portions 8a, 8b and a hollow portion 8c of the cylindrical shape is a passage for the liquid heat medium L. Since surface area is large, the liquid heat medium L can be effectively heated and heating capability is increased. It is preferable that the first opening portion 8a and the second opening portion 8b are formed respectively at both end portions of the electric heating component 8. For example, as illustrated in Fig. 3, the first opening portion 8a is formed at an end side of the electric heating component 8 as being faced to the upstream of the circulation of the liquid heat medium L and the second opening portion 8b is formed at the downstreammost side of the circulation of the liquid heat medium L as being at the tube 2 side. As being formed in this manner, the liquid heat medium L passing through the cylinder can be reliably conveyed to a far tube. For example, the second opening portion 8b may be formed by removing a part of the cylindrical shape as illustrated in Fig. 3(c).

Further, in the vehicle air conditioning electric heating type heater core according to the present embodiment, it is preferable that an anti-vibration component 44 is fitted to the outside of the electric heating component 1. The electric heating component can be prevented from being broken by vibration. A shape of the anti-vibration component 44 is not specifically limited as long as being a shape not to plug the flow passage in the header. For example, in addition to a structure having a cross-shaped blade portion 44a as illustrated in Fig. 3, examples thereof include a structure having a hole at some part. Further, in the present embodiment, material thereof is not limited as long as producing an effect of the present invention. It is possible to appropriately select rubber or the like.

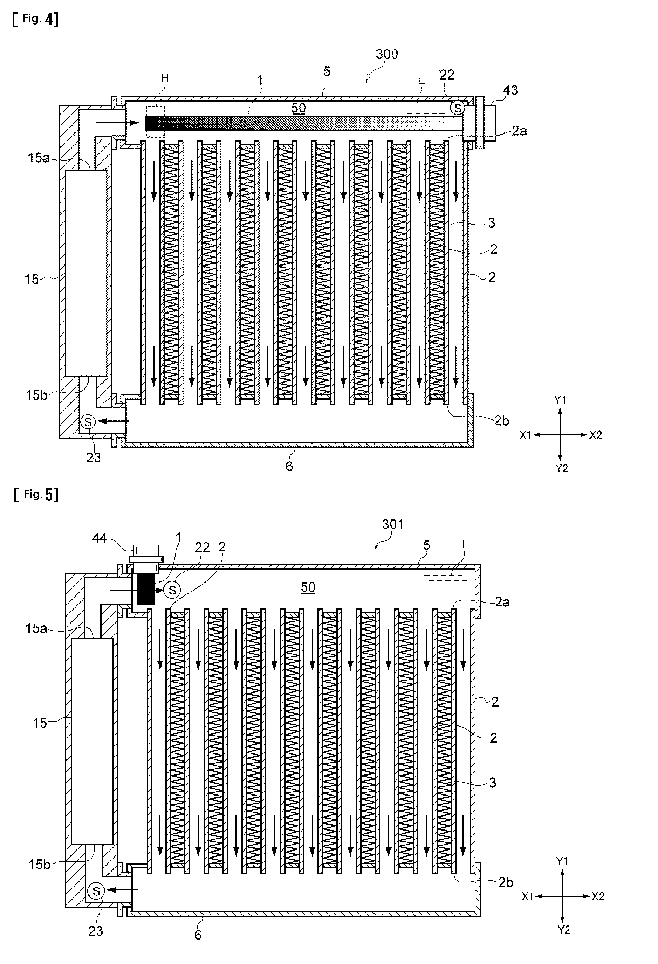

In Fig. 2, two of the electric heating components 1 in total are arranged at upper and lower headers 5, 6 for one each. Here, it is also possible to arrange either one in accordance with a desired heat discharge amount. Fig. 4 is a sectional view illustrating a structural outline of an example of a vehicle air conditioning electric heating type heater core of an embodiment having one electric heating component. In the vehicle air conditioning electric heating type heater core according to the present embodiment, it is preferable that the header includes the upstream side header 5 to which a discharge port side 15a of the circulating means 15 is connected and the downstream side header 6 to which an intake port side 15b of the circulating means 15 is connected; each of the tubes 2 has one end part 2a connected to the upstream side header 5 and the other end part 2b connected to the downstream side header 6; and the electric heating component 1 is arranged at the upstream side header 5 and has heating distribution in which a heating amount is largest at a part H close to the discharge port side 15a of the circulating means 15. It is more preferable to have the heating distribution in which the heating amount is largest at the part H close to the discharge port side 15a of the circulating means 15 and is gradually decreased toward the downstream side (toward direction X2 in Fig. 4). Since temperature of the circulating liquid heat medium L can be further uniform by forming the heating distribution as described above, temperature difference between the right and left (direction X1-X2) of the heater core can be lessened. Here, regarding the heating amount of the electric heating component 1, it is possible to obtain a desired heating amount by changing heating wire density of the electric heating component 1. Further, in the present embodiment, the method for forming a heating distribution is not specifically limited. For example, it is possible to adopt a structure to form a heating distribution as changing heating wire density in a single electric heating component or a structure to arrange a plurality of electric heating components having different heating amounts.

Fig. 5 is a sectional view illustrating a structural outline of a modified example of the vehicle air conditioning electric heating type heater core of the embodiment having one electric heating component. In the vehicle air conditioning electric heating type heater core 301 according to the present embodiment, it is preferable that the header includes the upstream side header 5 to which the discharge port side 15a of the circulating means 15 is connected and the downstream side header 6 to which the intake port side 15b of the circulating means 15 is connected; each of the tubes 2 has one end part 2a connected to the upstream side header 5 and the other end part 2b connected to the downstream side header 6; and the electric heating component 1 is arranged at the upstream side header 5 and is arranged at the upstream side from the respective tubes 2. With the above arrangement, the circulating liquid heat medium L invariably passes through the electric heating component 1, so that temperature can be further uniform as preventing shortcircuiting of cold water. Further, the electric heating component 1 can be downsized and cost reduction can be achieved.

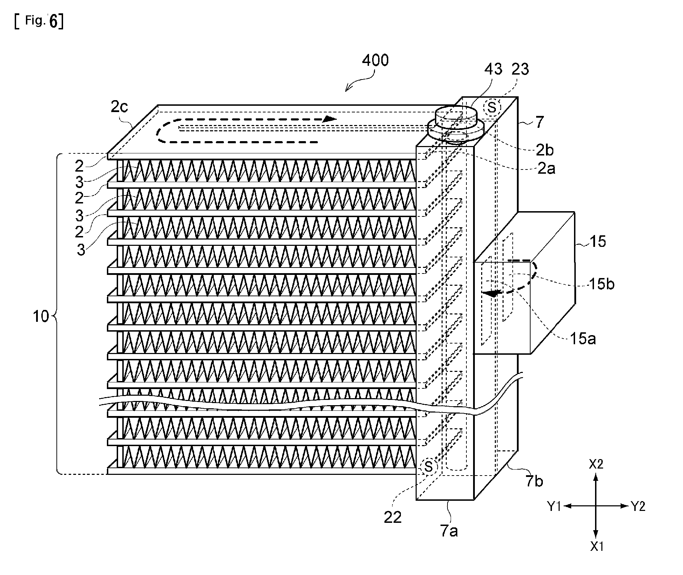

In Fig. 1, 2, 4 or 5, the end parts 2a, 2b of each tube 2 are connected respectively to the faced headers (the lower header 4a and the upper header 4b in Fig. 1 or the upstream side header 5 and the downstream side header 6 in Fig. 2, 4 or 5) . However, the present embodiment is not limited to this. It is also possible to adopt a single header as illustrated in Fig. 6. Fig. 6 is a sectional view illustrating a structural outline of another embodiment of the vehicle air conditioning electric heating type heater core. In the vehicle air conditioning electric heating type heater core 400 according to the present embodiment, it is preferable that a header 7 includes, in the single header 7, an upstream side compartment 7a to which a discharge port side 15a of the circulating means 15 is connected and a downstream side compartment 7b to which an intake port side 15b of the circulating means 15 is connected; and each of the tubes 2 having one end part 2a connected to the upstream side compartment 7a and the other end part 2b connected to the downstream side compartment 7b as including a turnback portion 2c. With the above arrangement, the header can be arranged singularly and space-saving can be achieved. In the structure of having two headers and the circulating means 15 as illustrated in Fig. 2, 4 or 5, since the upstream side header 5 and the downstream side header 6 are separated, there may be a case that a heating efficiency is decreased under influence of heat loss when the electric heating component 1 is arranged only at the downstream side header 6. In contrast, in the structure of having the single header as illustrated in Fig. 6, since the upstream side compartment 7a and the downstream side compartment 7b are closed in the same header, influence of heat loss is small even when being arranged at the downstream side compartment 7b. Accordingly, although it is more preferable to arrange the electric heating component 1 at the upstream side compartment 7a, it is also possible to arrange at the downstream side compartment 7b as not being limited to the above. Further, it is also possible to arrange at the both in accordance with a desired heat discharge amount.

Next, description will be performed on heating amount control of the vehicle air conditioning electric heating type heater core according to the present embodiment using Fig. 2, 4, 5 or 6.

As illustrated in Fig. 2, it is preferable that the vehicle air conditioning electric heating type heater core 200 according to the present embodiment includes a heat exchange portion temperature detecting element 21 which detects temperature of the heat exchange portion 10, a heating control means (not illustrated) which controls a heating amount of the electric heating component 1 in accordance with the temperature of the heat exchange portion 10 obtained from the heat exchange portion temperature detecting element 21, and a circulation amount control means (not illustrated) which controls a circulation amount by the circulating means 15 in accordance with the temperature of the heat exchange portion 10 obtained from the heat exchange portion temperature detecting element 21.

Since the heating amount of the electric heating component 1 and the circulation amount of the circulating means 15 are controlled together with temperature information of the heat exchange portion 10 detected by the heat exchange portion temperature detecting element 21, the part count of the temperature detecting elements can be reduced. Further, even when an airflow rate passing through the heat exchange portion 10, set temperature of blowing air and the like are varied, the heating amount can be controlled with a simple structure. Further, it is preferable that the heat exchange temperature detecting element 21 is attached to the fin 3 as illustrated in Fig. 2. The heating amount of the heat exchange portion 10 can be reliably detected.

For example, in a case that the temperature of the heat exchange portion 10 detected by the heat exchange temperature detecting element 21 is lower than desired temperature, a signal to activate powering to the electric heating component 1 or to enlarge the heating amount is output to the heating control means (not illustrated) and a signal to enlarge the circulation amount of the circulating means 15 is output to the circulation amount control means (not illustrated) . The temperature of the heat exchange portion 10 can be heightened and conditioning air blowing into a cabin can be heated. In a case that the temperature of the heat exchange portion 10 detected by the heat exchange portion temperature detecting element 21 is the desired temperature, a signal to maintain the heating amount of the electric heating component 1 is output to the heating control means (not illustrated) and a signal to lessen the circulation amount of the circulating means 15 is output to the circulation amount control means (not illustrated). The temperature of the heat exchange portion 10 can be maintained and temperature of conditioning air blowing into the cabin can be maintained. Further, in a case that the temperature of the heat exchange portion 10 detected by the heat exchange portion temperature detecting element 21 is higher than the desired temperature, a signal to deactivate powering to the electric heating element 1 or to lessen the heating amount is output to the heating control means (not illustrated) and a single to lessen the circulation amount of the circulating means 15 is output to the circulation amount control means (not illustrated) . The temperature of the heat exchange portion 10 can be lowered and the temperature of the conditioning air blowing into the cabin can be lowered.

As illustrated in Fig. 4, 5 or 6, it is preferable that the vehicle air conditioning electric heating type heater core according to the present embodiment includes a first liquid temperature detecting element 22 which is arranged at the downstream side of the discharge port side 15a of the circulating means 15 and at the downstream side of the electric heating component 1, a heating control means (not illustrated) which controls a heating amount of the electric heating component 1 in accordance with the temperature obtained from the first liquid temperature detecting element 22, a second liquid temperature detecting element 23 which is arranged between the tube 2 connected to the downstream side header 6 or the downstream side compartment 7b and the intake port side 15b of the circulating means 15, and a circulation amount control means (not illustrated) which controls the circulating means 15 in accordance with the temperature obtained from the second liquid temperature detecting element 23.

The first liquid temperature detecting element 22 is to detect the highest temperature t1 of the liquid heat medium L before discharging heat. A signal to enlarge or lessen the heating amount of the electric heating component 1 is output to the heating control means (not illustrated) in accordance with being high-low of the temperature t1 of the liquid heat medium L against desired temperature. Further, the second liquid temperature detecting element 23 is to detect temperature t2 of the liquid heat medium L after discharging heat. Increase or decrease of the circulation amount of the circulating means 15 is output to the circulation amount control means (not illustrated) in accordance with difference Δ (Δ = t1 - t2) between the temperature t1 of the liquid heat medium L detected by the first liquid temperature element 22 and the temperature t2 of the liquid heat medium L detected by the second liquid temperature detecting element 23. Since control of the highest temperature of the liquid heat medium L and the circulation amount of the liquid heat medium L can be serially controlled, it is possible to blow conditioning air having constant temperature into a cabin even when the airflow amount passing through the heater core or the set temperature of blowing air is varied.

For example, in a case that the temperature t1 of the liquid heat medium L detected by the first liquid temperature detecting element 22 is lower than the desired temperature, a signal to enlarge the heating amount of the electric heating component 1 is output to the heating control means (not illustrated) . In a case that the temperature t1 of the liquid heat medium L detected by the first liquid temperature detecting element 22 is the desired temperature, a signal to maintain the heating amount of the electric heating component 1 is output to the heating control means (not illustrated). Further, in a case that the temperature t1 of the liquid heat medium L detected by the first liquid temperature detecting element 22 is higher than the desired temperature, a signal to deactivate powering to the electric heating element 1 or to lessen the heating amount is output to the heating control means (not illustrated). Further, in each case, the circulation amount of the circulating means 15 is controlled in proportion to the difference Δ between the temperature t1 of the liquid heat medium L detected by the first liquid temperature detecting element 22 and the temperature t2 of the liquid temperature medium L detected by the second liquid temperature detecting element 23.

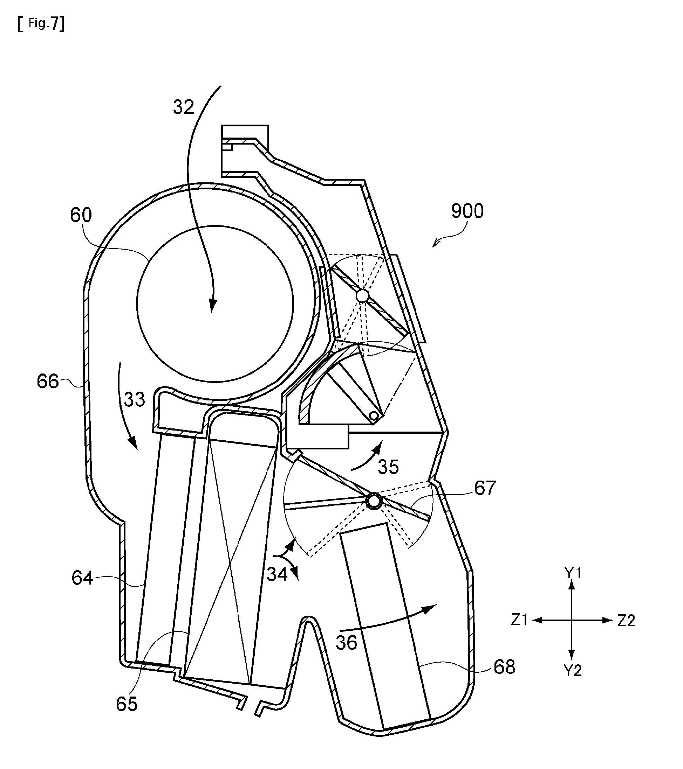

Fig. 7 illustrates a structure of a vehicle air conditioning device when the vehicle air conditioning electric heating type heater core according to the present embodiment is attached as a heater for air heating. In Fig. 7, direction Z1-Z2 denotes the front-rear direction of a vehicle, direction Y1-Y2 denotes the up-down direction of the vehicle, and further, the direction of front-back denotes the right-left direction of the vehicle. The vehicle air conditioning device 900 includes an airflow generating means (e.g., a blower) 60, a dust-collecting and deodorizing filter 64, an evaporator 65 and en electric heating type heater core 68 at a case 66 which forms an air passage. Airflow is formed at the air passage by operating the airflow generating means 60. That is, air outside a cabin or air inside the cabin is taken into the air passage owing to switching of an intake door (not illustrated) and airflow 32 thereof is sucked to the blower 60. Subsequently, airflow 33 is discharged to the dust-collecting and deodorizing filter 64 and the evaporator 65 by the blower 60. Defecated and heat-exchanged airflow 34 becomes to airflow 35 or airflow 36 owing to switching of an air-mixing door 67. The airflow 35 is airflow during air cooling operation. On the other hand, the airflow 36 is heated by the electric heating type heater core 68. The electric heating type heater core 68 is the vehicle air conditioning electric heating type heater core according to the present embodiment as being exemplified by the vehicle air conditioning electric heating type heater core of Fig. 1, 2, 4, 5 or 6.

Attaching of the electric heating type heater core 68 to the case 66 of the vehicle air conditioning device 900 is performed as being similarly to a traditional heater core. That is, the electric heating type heater core 68 is attached to the case 66 so that the fins 3 are oriented to heat the airflow 36 owing to heat exchange with the fins 3 as the airflow 36 passing through the fins 3 of the electric heating type heater core. Specifically, the arrangement is performed so that the longitudinal direction of the header of the electric heating type heater core illustrated in Fig. 1, 2, 4, 5 or 6 (direction X1-X2 in Fig. 1, 2, 4, 5 or 6) is to be perpendicular (the direction of front-back in Fig. 7) to the direction of the airflow 36 (direction Z1-Z2 in Fig. 7). Here, it is also possible to arrange to the vehicle air conditioning device as vertically inverting the upward direction (direction Y1 in Fig. 1, 2, 4, 5 or 6) and the downstream direction (direction Y2 in Fig. 1, 2, 4, 5 or 6) of the electric heating type heater core. In the vehicle air conditioning device 900 to which the electric heating type heater core 68 according to the present embodiment is attached, since generated heat of the electric heating component is diffused to the liquid heat medium, there is no local temperature rise. Accordingly, it is possible to prevent occurrence of burnt odor of organic substances contained in blowing air. Further, thermal deterioration such as thermal deformation of the case 66 which is made of resin mainly such as polypropylene becomes more unlikely to occur. In a case that the case 66 is located at a position where an occupant's body is contacted, being a popular arrangement especially for commercial vehicles, since the occupant's body is prevented from being contacted to an electric heating portion in the above case, safety can be ensured.

The vehicle air conditioning device 900 according to the present embodiment is fully suitable as an air conditioning device especially for a low heat source vehicle. Further, attaching space of the air conditioning device can be reduced by arranging instead of a heat exchanger. Since engine cooling water is not used, it is possible to be applied to an electric vehicle without an engine. Further, piping of engine cooling water can be eliminated when being applied to a gasoline-powered vehicle or a hybrid electric vehicle.

### REFERENCE SIGNS LIST

- 1, 8: Electric heating component
- 2: Tube
- 2a, 2b: End part of tube
- 2c: Turnback portion of tube
- 3: Fin
- 4, 7: Header
- 4a: Lower header
- 4b: Upper header
- 5: Upstream side header
- 6: Downstream side header
- 7a: Upstream side compartment
- 7b: Downstream side compartment
- 8a, 8b: Opening portion of electric heating component
- 8c: Hollow portion of electric heating component
- 10: Heat exchange portion
- 15: Circulating means
- 15a: Discharge port side
- 15b: Intake port side
- 21: Heat exchange portion temperature detecting element
- 22: First liquid temperature detecting element
- 23: Second liquid temperature detecting element
- 32, 33, 34: Airflow
- 35: Airflow during cooling operation
- 36: Airflow during heating operation
- 41: Heating portion
- 42: Non-heating portion
- 43: Terminal portion
- 44: Anti-vibration component
- 44a: Blade portion
- 50: Closed-system flow passage
- 60: Airflow generating means (e.g., blower)
- 64: Dust-collecting and deodorizing filter
- 65: Evaporator
- 66: Case
- 67: Air-mixing door
- 68, 100, 200, 300, 301, 400: Electric heating type heater core
- 900: Vehicle air conditioning device

## Claims

1. A vehicle air conditioning electric heating type heater core, comprising:
a heat exchange portion which has plural tubes and fins; and
a header to which the respective tubes are connected,
wherein an electric heating component is arranged at the inside of the header;
the respective tubes and the header form a closed-system flow passage; and
liquid heat medium is filled into the closed-system flow passage.

2. The vehicle air conditioning electric heating type heater core according to claim 1, further comprising a circulating means which circulates the liquid heat medium.

3. The vehicle air conditioning electric heating type heater core according to claim 2,
wherein the header includes an upstream side header to which a discharge port side of the circulating means is connected and a downstream side header to which an intake port side of the circulating means is connected;
each of the tubes has one end part connected to the upstream side header and the other end part connected to the downstream side header; and
the electric heating component is arranged at the upstream side header and has heating distribution in which a heating amount is largest at a part close to the discharge port side of the circulating means.

4. The vehicle air conditioning electric heating type heater core according to claim 2 or claim 3,
wherein the electric heating component has a cylindrical shape with at least two opening portions;
and a hollow portion of the cylindrical shape is a passage for the liquid heat medium.

5. The vehicle air conditioning electric heating type heater core according to any one of claims 2 to 4,
wherein an anti-vibration component is fitted to the outside of the electric heating component.

6. The vehicle air conditioning electric heating type heater core according to claim 2,
wherein the header includes an upstream side header to which a discharge port side of the circulating means is connected and a downstream side header to which an intake port side of the circulating means is connected;
each of the tubes has one end part connected to the upstream side header and the other end part connected to the downstream side header; and
the electric heating component is arranged at the upstream side header and is arranged at the upstream side from the respective tubes.

7. The vehicle air conditioning electric heating type heater core according to claim 2,
wherein the header includes, in the single header, an upstream side compartment to which a discharge port side of the circulating means is connected and a downstream side compartment to which an intake port side of the circulating means is connected; and
each of the tubes having one end part connected to the upstream side compartment and the other end part connected to the downstream side compartment as including a turnback portion.

8. The vehicle air conditioning electric heating type heater core according to any one of claims 2 to 7, further comprising:
a heat exchange portion temperature detecting element which detects temperature of the heat exchange portion;
a heating control means which controls a heating amount of the electric heating component in accordance with the temperature of the heat exchange portion obtained from the heat exchange portion temperature detecting element; and
a circulation amount control means which controls a circulation amount by the circulating means in accordance with the temperature of the heat exchange portion obtained from the heat exchange portion temperature detecting element.

9. The vehicle air conditioning electric heating type heater core according to any one of claims 2 to 7, further comprising:
a first liquid temperature detecting element which is arranged at the downstream side of the discharge port of the circulating means and at the downstream side of the electric heating component;
a heating control means which controls a heating amount of the electric heating component in accordance with the temperature obtained from the first liquid temperature detecting element;
a second liquid temperature detecting element which is arranged between the tube connected to the downstream side header or the downstream side compartment and the intake port of the circulating means; and
a circulation amount control means which controls the circulating means in accordance with the temperature obtained from the second liquid temperature detecting element.

10. The vehicle air conditioning electric heating type heater core according to any one of claims 1 to 9 to be used as a heater core for a rear heater of a gasoline-powered vehicle, a heater core for an electric vehicle, or a heater core arranged in parallel to a heater core which utilizes engine cooling water of a hybrid electric vehicle as a heat source.

11. A vehicle air conditioning device, comprising the vehicle air conditioning electric heating type heater core according to any one of claims 1 to 10.
